# EUROPÄISCHE PATENTSCHRIFT

(11) **EP 0 529 340 B1**
(45) Veröffentlichungstag und Bekanntmachung des Hinweises auf die Patenterteilung: **25.09.1996**
(21) Anmeldenummer: 92113065.4
(22) Anmeldetag: 31.07.1992
(51) Int. Cl.: H04N 5/44

(54) **Verfahren und Anordnung zur Programmspeicherung in Fernsehempfangsgeräten**
Method and device for memorising a programme in television receivers
Méthode et dispositif de mémorisation de programme dans des récepteurs de télévision

(30) Priorität: 26.08.1991 DE 4128265
(43) Veröffentlichungstag der Anmeldung: 03.03.1993
(73) Patentinhaber: BOSCH-SIEMENS HAUSGERÄTE GmbH, D-81669 München (DE)
(72) Erfinder: Gerich, Andreas, W-8000 München 83 (DE); Lerch, Dietmar, W-8060 Dachau (DE); Nickel, Rüdiger, W-8032 Gräfelfing (DE)

(56) Entgegenhaltungen:
- EP-A- 0 050 328
- EP-A- 0 072 943
- EP-A- 0 112 589
- DE-A- 3 145 407
- DE-A- 3 941 628
- GB-A- 1 568 184
- PATENT ABSTRACTS OF JAPAN vol. 12, no. 342 (E-658)14. September 1988 & JP-A-63 103 575
- PATENT ABSTRACTS OF JAPAN vol. 14, no. 51 (E-881)30. Januar 1990 & JP-A-12 76 914

## Beschreibung

Die Erfindung betrifft ein Verfahren zur Programmspeicherung in Fernsehempfangsgeräten nach dem Oberbegriff des Patentanspruchs 1 und eine Anordnung nach Patentanspruch 5.

Aus der DE-A-31 45 407 und der EP-A-0 050 328 sind Einrichtungen und verfahren zum automatischen Programmieren eines Stationsspeichers und zum Voreinstellen eines von dem Stationsspeicher steuerbaren Fernsehempfangs-Tuners bekannt, wobei davon ausgegangen wird, daß Fernsehsignalen senderseitig codierte Zusatzinformationen über sämtliche, dem jeweiligen Sender im zeitlichen Wechsel zugeordnete Programmquellen (beispielsweise "ARD" (= Erstes Fernsehprogramm der BR Deutschland), "ZDF"(Zweites Deutsches Fernsehen)) zugesetzt werden.
Bei den bekannten Einrichtungen werden bei Auftreten von Fernsehsendersignalen mit gleicher Kennung in Form eines im Fernsehsendersignal enthaltenen Kennungssignals aber unterschiedlicher Empfangsfeldstärke fernsehsendersignalindividuelle Informationen des Signals größter Feldstärke in einen Stationsspeicher abgespeichert, während fernsehsendersignalindividuelle Informationen kennungsgleicher Fernsehsignale geringerer Feldstärke nicht abgespeichert werden.

Aus der EP-A-0 438 694 ist ein weiteres Verfahren und eine Anordnung zur Programmsteuerung in Fernsehempfangsgeräten bekannt. Dabei werden bei einem Sendersuchlauf ebenfalls Fernsehsenderfrequenz- und -empfangsfeldstärkewerte detektiert. Bei mehreren kennungsgleichen Signalen werden die zugehörigen Frequenz- und Feldstärkewerte abgespeichert. Das Fersehempfangsgerät wird bei Ausfall eines kennungsgleichen Signals auf das andere Signal eingestellt.

Bei einem Sendersuchlauf können jedoch ungünstige Empfangsbedingungen vorliegen, die von Witterungseinflüssen abhängen. So führen beispielsweise Wolkenbildungen, Schnee- oder Hagelfall zu Reflexionen der Fernsehsignale. Reflektierte Fernsehsignale verursachen verzerrte Fernsehbilder und damit eine erhebliche Beeinträchtigung der Empfangsqualität.

Der Erfindung liegt daher die Aufgabe zugrunde, ein Verfahren der eingangs genannten Art in der Weise auszubilden, daß bei der Programmspeicherung Reflexionen der Fernsehsignale berücksichtigt werden.

Die Lösung dieser Aufgabe erfolgt erfindungsgemäß durch die kennzeichnenden Merkmale des Patentanspruchs 1.

Hierdurch ergibt sich der Vorteil, daß sich in einem Fernsehempfangsgerät, bei dem reflexionsabhängige Informationen angezeigt werden, zu einem späteren Zeitpunkt ein neuer Senderlauf auslösen läßt, um den Einfluß zeitabhängiger Reflexionen auszuschließen. Bei der erstmaligen Positionierung einer Empfangsantenne, beispielsweise für ein Fernsehgerät im Campingbereich, läßt sich der Ort eines weniger reflexionsbehafteten Empfangs in einfacher Weise bestimmen. Damit lassen sich auch ortsabhängige Reflexionen vermindern.

Eine weitere vorteilhafte Ausführungsform der Erfindung ist dadurch gekennzeichnet, daß die Steuerung des Fernsehempfangsgeräts im Rahmen des Sendersuchlaufs bei Auftreten eines zweiten oder weiterer Fernsehsendersignale mit jeweils einem dieselbe Programmquelle bezeichnenden Kennungssignal die aus den Feldstärkewerten und aus den den Grad der Kennungssignalübereinstimmung bezeichnenden Werten gebildeten Signalgütewerte des ersten und zweiten Fernsehsendersignals miteinander vergleicht und die entsprechenden fernsehsendersignalindividuellen Informationspaare in erste und zweite kennungssignalindividuelle Speicher unterschiedlicher Prioritäten in der Weise einspeichert, daß die Informationspaare den Signalgüten entsprechend den Prioritäten zugeordnet werden. Damit sind ausgewählten Stationstasten des Fernsehempfangsgeräts Fernsehsignale mit der jeweils besten verfügbaren Empfangsgüte zugeordnet. Durch Betätigung derselben Stationstaste wird dann, wenn sich die Empfangsgüte eines Fernsehsendersignals ursprünglich hoher Empfangsgüte verschlechtert, das Fernsehempfangsgerät auf ein Signal gleicher Kennung eingestellt.

Eine weitere vorteilhafte Ausführungsform ist dadurch gekennzeichnet, daß die Steuerung nach Abschluß des Sendersuchlaufs in den Zeiten, in denen das Fernsehempfangsgerät auf ein Fersehsignal eingestellt ist, zyklisch in vorgebenenen zeitlichen Abständen für die beiden Fernsehsignale gleicher Kennung aktuelle Signalgütewerte bildet und die aktualisierten Informationspaare in die ersten und zweiten kennungssignalindividuelle Speicher den aktualisierten Signalgüten entsprechend einspeichert oder die Zuordnung der kennungssignalindividuellen Speicher zu den Stationstasten vertauscht.
Damit wird eine Bedienperson von entsprechenden Tastenbetätigungen während des Empfangs eines Fernsehprogramms entlastet, wobei das Fernsehgerät selbsttätig auf das Signal der besten verfügbaren Empfangsqualität umschaltet.
Dieser Vorteil ist besonders bei einem Videoaufzeichnungsgerät ausgeprägt, wenn sich während einer Aufzeichnung durch Abfall der Empfangsfeldstärke und/oer durch Auftreten oder Vergrößerung von Reflexionen die Empfangsqualität des gerade verwendeten Fernsehsendersignals verschlechtert und ein kennungssignalgleiches Fernsehsendersignal besserer Empfangsqualität zur Verfügung steht. Das Verfahren gemäß der Erfindung ermöglicht in diesem Fall die praktisch störungsfreie Aufzeichnung einer Fernsehsendung, ohne daß ein Eingriff einer Bedienperson erforderlich ist.

Diese Vorteilen bestehen insbesondere auch dann, wenn nach einer weiteren Ausführungsform der Erfindung die Steuerung des Fernsehempfangsgeräts nach Abschluß des Sendersuchlaufs das Fernsehsendersignal der eingestellten Frequenz auf Ausfall der Empfangsfeldstärke überprüft und ausgelöst durch den Ausfall der Empfangsfeldstärke aktuelle Signalgütewerte bildet und die aktualisierten Informationspaare in die ersten und zweiten kennungssignalindividuelle Speicher den aktualisierten Signalgüten entsprechend einspeichert oder die Zuordnung der kennungssignalindividuellen Speicher zu den Stationstasten vertauscht.

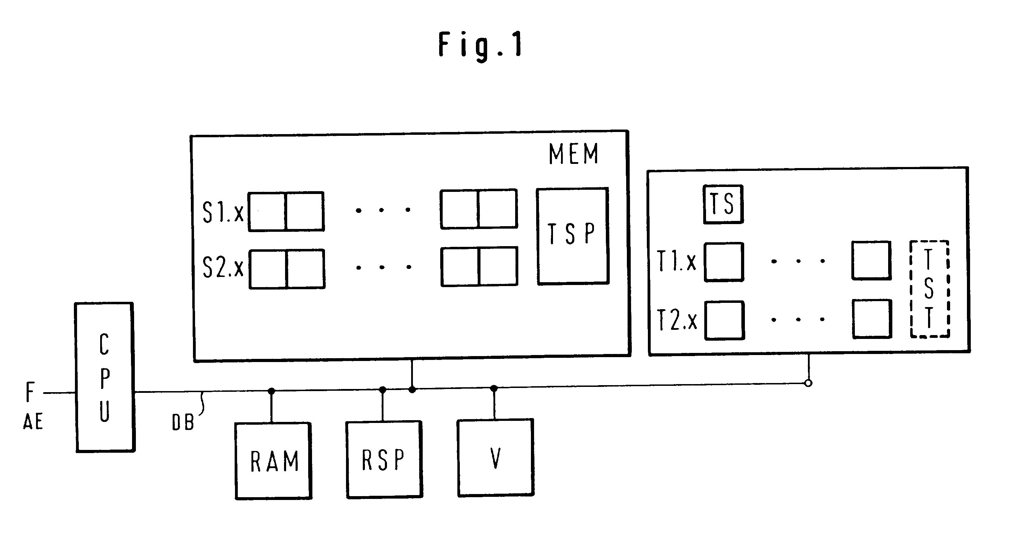

Die Erfindung wird nun anhand zweier Zeichnungen beschrieben.
Es zeigt
Figur 1 das Blockschaltbild einer erfindungsgemäßen Anordnung zur Programmspeicherung in Fernsehempfangsgeräten.
Figur 2 das Blockschaltbild einer Anordnung, mit der der Reflexionsgrad des Fernsehsignals bestimmt wird.

Ein Fernsehempfangsgerät F enthält eine Steuerung CPU, die über einen Datenbus DB mit einem Speicher RAM verbunden ist, in dem das Programm zur Durchführung des erfindungsgemäßen Verfahrens abgelegt ist. Die Steuerung CPU ist weiterhin über den Datenbus DB mit einem Arbeitsspeicher MEM, mit Stationstasten Tl.x, T2.x (x = 1 ... n) sowie mit einer Sondertaste TS verbunden. Grundsätzlich sind die Tasten T1.x den Speichern S1.x und die Tasten T2.x den Speichern S2.x zugeordnet. Jedoch können, wie noch beschrieben wird, diese Zuordnungen verändert werden. Die Sondertaste TS dient der Auslösung des Suchlaufs. Die Tastatur kann eine eigene Teilsteuerung TST aufweisen, die die eigentlichen Tastenfunktionen steuert und insoweit die Steuerung CPU entlastet. Die Tasten Tx und TS können in einem Fernbedienungsgeber angeordnet sein und mit der Steuerung CPU drahtlos über in den Figuren nicht dargestellte Sende- und Empfangseinrichtungen beziehungsweise über eine nicht dargestellte Verbindungsleitung verbunden sein.

Der Arbeitsspeicher MEM, der als nichtflüchtiger Speicher ausgebildet ist, umfaßt erste und zweite kennungssignalindividuelle Speicher S1.x, S2.x, in die, wie noch beschrieben wird, Informationspaare f'xB'x abgespeichert werden. Die Speicher S1.x, S.2x sind durch Fernsehsender-Kennungssignale bzw. Programmquellensignale Kx bezeichnende Adressdaten K'x adressierbar und weisen unterschiedliche Prioritäten auf. Danach wird beispielsweise für die Fernsehsender-Signale fslund fs2 mit jeweils einem dieselbe Programmquelle bezeichnenden Kennungssignal K1, sofern das Fernsehsender-Signal fsl eine höhere Signalgüte B1 aufweist das fs2, das Informationspar f'1B'1 in den Speicher S1.1 und das Informationspaar f'2B'2 in den Speicher 52.1 eingeschrieben. Den Speichern S1.x und S2.x sind die Stationstasten T1.1 und T2.1 zugeordnet.

Weiterhin ist die Steuerung CPU mit einem Tabellenspeicher TSP verbunden, in dem Adressendaten der ersten und zweiten kennungssignalindividuellen Speicher S1.x, S2.x abgespeichert sind. Ein ebenfalls an den Datenbus DB angekoppelter Referenzwertspeicher RSP enthält Daten, die die Zuordnung vorgegebener Fernsehsender-Frequenzen fx und Referenzkennungssignalwerte RKx bezeichnen. Diese Daten gelten für bestimmte Empfangsgebiete und sind damit regionen- bzw. länderspezifisch. Insbesondere ist der Referenzwertspeicher RSP manuell lösbar mit dem Datenbus DB verbindbar, so daß sich Fernsehgeräte in einfacher Weise auf unterschiedliche Empfangsgebiete ausrüsten lassen. Der Speicher RSP ist wie der Arbeitsspeicher als nichtflüchtiger Speicher ausgebildet.

Das der Fernsehempfangsgeräte-Steuerung -Steuerung CPU zugeordnete Programm ist in der Weise ausgebildet, daß der Inhalt der ersten und zweiten kennungssignalindividuelle Speicher S1.x, S2.x und gegebenenfalls der Inhalt des Referenzwertspeichers RSP sowie die die Feldstärke und/oder die den Grad der Kennungssignalübereinstimmung bezeichnenden Werte A'x, U'x auf einer optischen Anzeigeeinrichtung, insbesondere auf dem Bildschirm des Fernsehgeräts, darstellbar sind.

Nicht in der Figur dargestellt ist eine mit der Fernsehgeräteempfangssteuerung CPU verbundene Anordnung zur Ermittlung der Feldstärkewerte Ax.
Die Anordnung kann als Schwellwertdetektor, beispielsweise mit veränderbarem Schwellwert, ausgebildet sein.

Die Erfindung geht davon aus, daß an dem Empfangsort eines Fernsehgeräts Fernsehsendersignale empfangen werden, die jeweils ein eine bestimmte Programmquelle (beispielsweise ARD, ZDF usw. ) bezeichnendes Programmquellen- oder Kennungssignal Kx umfassen. Ein solches Kennungssignal kann beispielsweise in einem Farbfernsehsignal enthalten sein, insbesondere im einem Bi-phase-Code modulierten Datenblock in Zeile 329 einer 625-Zeilennorm, bzw. in Teletextdaten (Videotextdaten), die gemeinsam mit einem Fernseh signal übertragen werden. Die Fernsehsignale eines Senders, der zu unterschiedlichen Zeiten zwei unterschiedliche Programme sendet, enthalten zwei unterschiedliche Kennungssignale, die im zeitlichen Wechsel vollbildsequentiell ausgestrahlt werden. Wenn das erste Kennungssignal aus dem 8-Bit-Datenwort 00011000 besteht und das zweite Kennungssignal aus dem 8-Bit-Datenwort 00011111, wird in einem ersten, dritten, fünften, ... Vollbild das erste Kennungssignal 00011000 und im zweiten, vierten, sechsten, ... Vollbild das zweite Kennungssignal 00011111 übertragen.

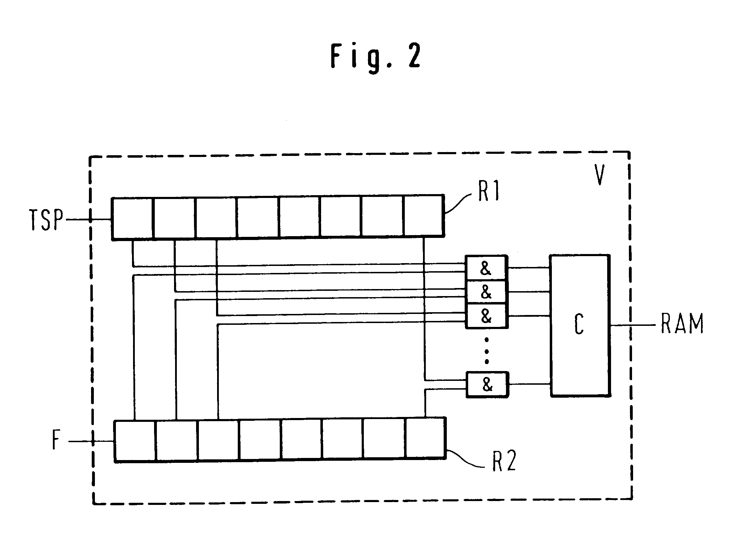

Reflexionen des Fernsehsendersignals beeinflussen unter anderem das jeweils mitübertragene Kennungssignal Kx. So kann ein aus dem Datenwort 00011000 bestehendes Kennungssignal unter dem Einfluß von Reflexionen in "00011001" verfälscht werden.
Die Verfälschungen können durch die in Figur 2 schematisch dargestellte Anordnung V erkannt und bewertet werden. Die dargestellte Anordnung V besteht aus einer Vergleichsschaltung mit zwei jeweils aus 8 Speicherstellen bestehenden Registern R1 und R2. In das Register R1 wird das im Tabellenspeicher TSP abgespeicherte Referenzkennungssignalwort RKx, hier 00011000, eingelesen, während in das Register R2 das aus dem empfangenen Fernsehsignal extrahierte Kennungssignal eingelesen wird. Dieses sei in "00011001" verfälscht. Zur Ermittlung des Ubereinstimmungsgrads beider Registerinhalte führen die Ausgänge korrespondierender Speicherzellen auf UND-Gatter, deren Ausgangswerte "1" (bei Ubereinstimmung zweier korrespondierender Speicherzelleninhalte) bzw. "0" (bei Nichtübereinstimmung) durch einen Schalter S abgefragt und einem Zähler C zugeführt werden. Der Zähler stellt damit Ubereinstimmungsgrade U'x zwischen O, 12,5%, 25%, ... 100% fest. Diese Werte U'x werden, wie noch beschrieben wird, mit Feldstärkewerten A'x zu Empfangsgütewerten B'x verknüpft.

Die Steuerung CPU des Fernsehempfangsgeräts F überprüft bei einem Sendersuchlauf über den von dem Fernsehempfangsgerät F empfangbaren Fernsehsender-Frequenzbereich nacheinander Fernsehsendersignale fsx (x = 1...n) auf diese mitumfassende Kennungssignale Kx, die auch als Programmquellensignale bezeichnet werden. Im Zusammenwirken mit der Einrichtung AE ermittelt die CPU die Empfangsfeldstärke Ax des detektierten Signals. Wird ein Fernsehsender-Signal detektiert, bildet die Steuerung CPU einen digital codierten Wert f'x für die Fernsehsenderfrequenz fx und und einen digital codierten Wert A'x für die Empfangsfeldstärke Ax. Um die Signalgüte in Abhängigkeit von der Empfangsfeldstärke Ax und dem reflexionsabhängigen Kennungssignal-Ubereinstimmungsgrad Ux festzulegen, werden beide absoluten Größen Ax und Ux mit einem Faktor, zum Beispiel 0,5 gewichtet. Die mit dem Faktor gewichteten Werte werden beispielsweise additiv zum Signalgütewert Bx verknüft und für Bx wird ein digital codierter Wert B'x gebildet. Das Informationspaar fxB'x wird in einen von gegebenenfalls mehreren kennungssignalindividuellen Speicher S1.x, S2.x einspeichert. Hierzu wird auf die im Referenzswertspeicher TSP abgespeicherte Zuordnung von Frequenz und Referenzkennungssignalwert sowie auf die im Tabellenspeicher TSP abgespeicherten Adressdaten für die kennungssgnalindividuellen Speicher S1.x, S2.x zugegriffen.
Beim ersten Auftreten eines Fernsehsendersignals mit einer bestimmten Kennung Kx wird das Informationswort f'1B'1 in den Speicher S1.x eingeschrieben, dem die kennungssignalindividuelle Stationstaste T1.x zugeordnet ist. Durch deren Betätigung ruft die Steuerung CPU die in dem Speicher S1.x abgespeicherte Frequenzinformation f'x ab und stellt das Fernsehempfangsgerät F auf die der abgerufenen Frequenzinformation f'x entsprechende Frequenz fx ein.
Das der Steuerung CPU zugeordnete Programm ist also in der Weise ausgebildet, daß im Rahmen eines Sendersuchlaufs bei Auftreten eines Fernsehsendersignals fsl das mitübertragene fernsehsenderfrequenzindividuelle Kennungssignal K1 mit einem im Referenzwertspeicher RSP des Fersehempfangsgeräts F abgespeicherten, derselben Fernsehsenderfrequenz t1 entsprechenden Referenzkennungssignalwert RK1 auf Ubereinstimmung geprüft wird. Weiter wird ein den Grad der Ubereinstimmung bezeichnender Wert U'1 gebildet, dieser Wert U'1 wird mit dem zugehörigen Empfangsfeldstärkewert A'1 zu einem Signalgütewert B'1 verknüpft. Schließlich wird dieser Wert B'1 zusammen mit dem zugehörigen Frequenzwert f'1 als Informationspaar f'1B'1 in einen kennungssignalindividuellen Speicher S1.x abspeichert.

Tritt bei einem Sendersuchlauf neben dem ersten Fernsehsendersignal fsl ein zweites Fernsehsendersignal fs2 auf, wobei beide ein jeweils dieselbe Programmquelle bezeichnendes Kennungssignal Kl aufweisen, bildet die Steuerung CPU wiederum aus den Feldstärkewerten A'1, A'2 und aus den den Grad der Kennungssignalübereinstimmung bezeichnenden Werten U'1, U'2 Signalgütewerte B'1, B'2 des ersten und zweiten Fernsehsendersignals fs1, fs2 und vergleicht die Werte B'1, B'2 miteinander. Das Informationspaar, das dem Fernsehsender-Signal höherer Signalgüte entspricht, wird in den Speicher S1.x und das Informationspaar, das dem Fernsehsender-Signal geringerer Signalgüte entspricht, wird in den Speicher S2.x eingeschrieben. Alternativ hierzu kann, wenn das im Rahmen des Sendersuchlauf zweite detektierte Fernsehsender-Signal die höhere Signalgüte B2 aufweist, das Informationspaar f'2B'2 in den Speicher S2.x eingeschrieben werden. In diesem Fall wird die ursprüngliche Zuordnung der Stationstaste T1.x zum Speichers S1.x aufgehoben und die Stationstaste T1.x wird dem Speicher S2.x zugeordnet. Damit wird durch Betätigung der Taste T1.x unverändert das Fernsehgerät F auf das Fernsehsender-Signal höherer Signalgüte eingestellt.

Nach einer weiteren Ausführungsform der Erfindung bildet die Steuerung CPU nach Abschluß des Sendersuchlaufs in den Zeiten, in denen das Fernsehempfangsgerät F auf ein Fernsehsignal fs1 eingestellt ist, zyklisch in vorgebenenen zeitlichen Abständen für die beiden Fernsehsignale fs1, fs2 gleicher Kennung K1 zyklisch in vorgebenenen zeitlichen Abständen für die beiden Fernsehsignale fs1, fs2 aktuelle Signalgütewerte B'1a, B'2a und schreibt die aktualisierten Informationspaare f'1B'1a, f'2B'2a in die ersten und zweiten kennungssignalindividuellen Speicher S1.1, S2.1 den aktualisierten Signalgüten B1a, B2a entsprechend ein. Ändern sich die Inhalte beider Speicher in der Weise, daß ursprünglich in Speicher S1.1 das Informationspaar f'1B'1 eingeschrieben war, und anschließend das Informationspaar f'2B'2a in S1.1 eingeschrieben wird (die Signalgüte B2a ist dabei höher als die Signalgüte B1), schaltet die Steuerung CPU das Fernsehgerät F auf das Signal der Frequenz f2 um.

Diese Aktualisierung der Informationspaare in den Speichern S1.x, S2.x kann auch durch den von der Steuerung CPU im Zusammenwirken mit der Einrichtung AE erkannten Ausfall der Empfangsfeldstärke Ax des gerade eingestellten Fernsehsignals ausgelöst werden.

Die zuvor beschriebene Anordnung läßt sich im Zusammenhang mit einem Videorecorder verwenden, der dazu dient, mindestens einen vorgewählten Programmbeitrages aufzuzeichnen. Dieser Programmbeitrag ist durch eine weitere, in einem Fernsehsendersignal fsx enthaltene Zusatzinformation identifizierbar, wobei die im Referenzwertspeicher RSP abgespeicherten, die Zuordnung von Fernsehsender-Frequenzen fx und Referenzkennungssignalwerte RKx bezeichnenden länderspezifischen Daten benutzt werden.

## Patentansprüche

1. Verfahren zur Programmspeicherung in Fernsehempfangsgeräten, wobei eine Steuerung(CPU) des Fernsehempfangsgeräts(F) bei einem Sendersuchlauf über den von dem Fernsehempfangsgerät(F) empfangbaren Fernsehsender-Frequenzbereich nacheinander Fernsehsendersignale (fsx, x = 1 ... n) auf diese mitumfassende Kennungssignale (Programmquellensignale Kx) überprüft, ein die fernsehsenderfrequenz (fx) und eine von der Empfangsfeldstärke (Ax) abhängige Signalgüte (Bx) bezeichnendes Informationspaar (f'xB'x) bildet und dieses Informationspaar (f'xB'x) in einen von gegebenenfalls mehreren kennungssignalindividuellen Speicher (S1.x, S2.x) einspeichert, denen je eine kennungssignalindividuelle Stationstaste (T1.x, T2.x) zugeordnet ist, durch deren Betätigung die Steuerung (CPU) die in dem zugehörigen Speicher (S1.x, S2.x) abgespeicherte Frequenzinformation (f'x) abruft und das Fernsehempfangsgerät (F) auf die der abgerufenen Frequenzinformation (f'x) entsprechende Frequenz (fx) einstellt,
**dadurch gekennzeichnet**,
daß die Steuerung (CPU) im Rahmen eines Sendersuchlaufs bei Auftreten eines Fernsehsendersignals (fs1) das mitübertragene fernsehsenderfrequenzindividuelle Kennungssignal(K1) mit einem im Fernsehempfangsgerät (F) abgespeicherten, derselben Fernsehsenderfrequenz (f1) entsprechenden Referenzkennungssignalwert (RK1) auf Ubereinstimmung prüft und einen den Grad der Ubereinstimmung bezeichnenden Wert (U'1) bildet, diesen Wert (U'1) mit dem zugehörigen Empfangsfeldstärkewert (A'1) zu einem Signalgütewert (B'1) verknüpft und diesen Wert (B'1) zusammen mit dem zugehörigen Frequenzwert (f'1) als Informationspaar (f'1B'1) in einen kennungssignalindividuellen Speicher (S1.x) abspeichert.

2. Verfahren nach Anspruch 1,
**dadurch gekennzeichnet**,
daß die Steuerung(CPU) des Fernsehempfangsgeräts (F) im Rahmen des Sendersuchlaufs bei Auftreten eines zweiten oder weiterer Fernsehsendersignale (fs1, fs2) mit jeweils einem dieselbe Programmquelle bezeichnenden Kennungssignal (K1) die aus den Feldstärkewerten (A'1, A'2) und aus den den Grad der Kennungssignalübereinstimmung bezeichnenden Werten (U'1, U'2) gebildeten Signalgütewerte (B'1, B'2) des ersten und zweiten Fernsehsendersignals (fs1, fs2) miteinander vergleicht und die entsprechenden fernsehsendersignalindividuellen Informationspaare (f'1B'1, f'2B'2) in erste und zweite kennungssignalindividuelle Speicher (S1.1, S2.1) unterschiedlicher Prioritäten in der Weise einspeichert, daß die Informationspaare (f'1B'1, f'2B'2) den Signalgüten (B1, B2) entsprechend den Prioritäten zugeordnet werden.

3. Verfahren nach Anspruch 2,
**dadurch gekennzeichnet**,
daß die Steuerung (CPU) nach Abschluß des Sendersuchlaufs in den Zeiten, in denen das Fernsehempfangsgerät auf ein Fernsehsignal eingestellt ist, zyklisch in vorgebenenen zeitlichen Abständen für die beiden Fernsehsignale gleicher Kennung zyklisch in vorgebenenen zeitlichen Abständen für die beiden Fernsehsignale (fs1, fs2) aktuelle Signalgütewerte (B'1a, B'2a) bildet und die aktualisierten Informationspaare (f'1B'1a, f'2B'2a) in die ersten und zweiten kennungssignalindividuellen Speicher (S1.1, S2.1) den aktualisierten Signalgüten (B1a, B2a) entsprechend einspeichert oder die Zuordnung der kennungssignalindividuellen Speicher (S1.x, S2.x) zu den Stationstasten (T1.x, T2.x) vertauscht.

4. Verfahren nach Anspruch 2 und 3,
**dadurch gekennzeichnet**,
daß die Steuerung (CPU) des Fernsehempfangsgeräts (F) nach Abschluß des Sendersuchlaufs das Fernsehsendersignal (fs1) der eingestellten Frequenz (f1) auf Ausfall der Empfangsfeldstärke (A1) überprüft und ausgelöst durch den Ausfall der Empfangsfeldstärke (A1) aktuelle Signalgütewerte (B'1a, B'2a) bildet und die aktualisierten Informationspaare (f'1B'1a, f'2B'2a) in die ersten und zweiten kennungssignalindividuellen Speicher (S1.1, S2.1) den aktualisierten Signalgüten (B1a, B2a) entsprechend einspeichert oder die Zuordnung der kennungssignalindividuellen Speicher (S1.x, S2.x) zu den Stationstasten (T1.x, T2.x) vertauscht.

5. Anordnung zur Durchführung des Verfahrens nach einem der vorstehenden Ansprüche, in der
eine Fernsehempfangsgeräte-Steuerung (CPU) über einen Datenbus (DB) mit einem ein Programm zur Verfahrensdurchführung enthaltenen Speicher (RAM) und einem Arbeitsspeicher (MEM) verbunden ist, der erste und zweite kennungssignalindividuelle Speicher (S1.x, S2.x) zur Aufnahme von Fernsehsenderfrequenz (fx) und Signalgüte (Bx) bezeichnender Informationspaare (f'xB'x) sowie einen Tabellenspeicher (TSP) umfaßt, in dem Adressendaten der ersten und zweiten kennungssignalindividuellen Speicher (S1x, S2x) abgespeichert sind, und die Steuerung (CPU) weiterhin mit einem Referenzwertspeicher (RSP), in dem die Zuordnung vorgegebener Fernsehsender-Frequenzen (fx) und Referenzkennungssignalwerte (RKx) bezeichnende länderspezifische Daten abgespeichert sind, sowie mit Stationstasten (Tx) verbunden ist.

6. Anordnung nach Anspruch 5, wobei
die Fernsehempfangsgeräte-Steuerung (CPU) in der Weise ausgebildet ist, daß der Inhalt der ersten und zweiten kennungssignalindividuellen Speicher (S1.x, S2.x) und gegebenenfalls der Inhalt des Referenzwertspeichers (RSP) auf einer optischen Anzeigeeinrichtung sowie die die Feldstärke und/oder die den Grad der Kennungssignalübereinstimmung bezeichnenden Werte (A'x, U'x) darstellbar sind.

7. Anordnung nach einem der Ansprüche 5 oder 6,
wobei
eine mit der Fernsehgeräteempfangssteuerung (CPU) verbundene Anordnung (AE) zur Ermittlung der Feldstärkewerte (Ax) als Schwellwertdetektor ausgebildet ist.

8. Anordnung nach Anspruch 7, wobei die Anordnung (AE) als Schwellwertdetektor mit veränderbarem Schwellwert ausgebildet ist.

9. Anordnung nach einem der Ansprüche 5 bis 8,
wobei
der Referenzwertspeicher (RSP) manuell lösbar mit dem Datenbus (DB) verbindbar ist.

10. Anordnung nach einem der Ansprüche 5 bis 9,
wobei
der Arbeitsspeicher (MEM) und der Referenzswertspeicher (RSP) als nichtflüchtiger Speicher ausgebildet sind.

11. Verwendung der Anordnung nach einem der Ansprüche 5 bis 10 bei einem Videorecorder zum Aufzeichnen mindestens eines vorgewählten Programmbeitrages, der durch eine weitere, in einem Fernsehsendersignal (fsx) enthaltene Zusatzinformation identifizierbar ist, unter Benutzung der im Referenzwertspeicher (RSP) abgespeicherten, die Zuordnung von Fernsehsender-Frequenzen (fx) und Referenzkennungssignalwerte (RKx) bezeichnenden länderspezifischen Daten abgespeichert sind.

## Claims

1. Method for the program storage in television receiver appliances, wherein a control (CPU) of the television receiving appliance (F) during a transmitter search run across the television transmitter frequency range, which is receivable by the television receiving appliance (F), checks television transmitter signals (fsx, x = 1 to n) one after the other for these also including identification signals (program source signals Kx), forms an information pair (f'x, B'x) denoting the television transmitter frequency (fx) and a signal quality (Bx) dependent on the received field strength (Ax) and stores this information pair (f'x, B'x) into one of in a given case several storage devices (S1.x, S2.x), which are individual to an identification signal and which are each associated with a respective station key (T1.x, T2.x), which is individual to an identification signal and by the actuation of which the control (CPU) calls up the frequency information (f'x) stored in the associated storage device (S1.x, S2.x) and sets the television receiving appliance (F) to the frequency (fx) corresponding to the called-up frequency information (f'x), characterised thereby, that the control (CPU) within the scope of a transmitter search run and on the appearance of a television transmitter signal (fs1) checks the also transmitted identification signal (K1), which is individual to the television transmitter frequency, for agreement with a reference identification signal value (RK1), which is stored in the television receiving appliance (F) and corresponds with the same television transmitter frequency (f1), and forms a value (U'1) denoting the degree of the agreement, logically interlinks this value (U'1) with the associated reception field strength value (A'1) to form a signal quality value (B'1) and stores this value (B'1) together with the associated frequency value (f'1) as information pair (f'x, B'x) in a storage device (S1.x), which is individual to an identification signal.

2. Method according to claim 1, characterised thereby, that the control (CPU) of the television receiving appliance (F) within the scope of the transmitter search run and on the appearance of a second or further television transmitter signals (fs1, fs2) with an identification signal (K1), which denotes the same program source each time, compares the signal quality values (B'1, B'2), which have been formed out of the field strength values (A'1, A'2) and out of the values (U'1, U'2) denoting the degree of the identification signal agreement, of the first and the second television transmitter signal (fs1, fs2) each with the other and stores the corresponding information pairs (f'1, B'1; f'2, B'2), which are individual to a television transmitter signal, into first and second storage devices (S1.1, S2.1), which are individual to an identification signal, of different priorities in such a manner that the information pairs (f'1, B'1; f'2, B'2) are associated with the signal qualities (B1, B2) according to the priorities.

3. Method according to claim 2, characterised thereby, that the control (CPU) after termination of the transmitter search run and in the times, in which the television receiving appliance (F) is set to a television signal, cyclically at preset time intervals forms actual signal quality values (B'1a, B'2a) for both the television signals (fs1, fs2) of the same identification and stores the updated information pairs (f'1, B'1a; f'2, B'2a) into the first and second storage devices (S1.1, S2.1), which are individual to an identification signal, according to the updated signal qualities (B1a, B2a) or interchanges the association of the station keys (T1.x, T2.x) with the storage devices (S1.x, S2.x), which are individual to an identification signal.

4. Method according to claim 2 and 3, characterised thereby, that the control (CPU) of the television receiving appliance (F) after termination of the transmitter search run checks the television transmitter signal (fs1) of the set frequency (f1) for failure of the reception field strength (A1) and, triggered by the failure of the reception field strength (A1), forms actual signal quality values (B'1, B'2a) and stores the updated information pairs (f'1, B'1a; f'2, B'2a) into the first and second storage devices (S1.1, S2.1), which are individual to an identification signal, according to the updated signal qualities (B1a, B2a) or interchanges the association of the station keys (T1.x, T2.x) with the storage devices (S1.x, S2.x), which are individual to an identification signal.

5. Arrangement for the performance of the method according to one of the preceding claims, in which a television receiver appliance control (CPU) is connected by way of a data bus (DB) with a storage device (RAM), which contains a program for the performance of the method, and a working storage device (MEM), which comprises first and second storage devices (S1.x, S2.x), which are individual to an identification signal, for the recording of information pairs (f'x, B'x) denoting the television transmitter frequency (fx) and the signal quality (Bx) as well as a table storage device (TSP), in which address data of the first and second storage devices (S1.x, S2.x), which are individual to an identification signal, are stored, and the control (CPU) is furthermore connected with a reference value storage device (RSP), in which the association of preset television transmitter frequencies (fx) and data, which are specific to countries and denote reference identification signal values (RKx), are stored, as well as with station keys (Tx).

6. Arrangement according to claim 5, in which the television receiver appliance control (CPU) is constructed in such a manner that the contents of the first and second storage devices (S1.x, S2.x), which are individual to an identification signal and in a given case the contents of the reference value storage device (RSP) as well as the values (A'x, U'x), which denote the field strength and/or the degree of the identification signal agreement, are displayable on an optical display equipment.

7. Arrangement according to one of the claims 5 and 6, in which an arrangement (AE), which is connected with the television receiver appliance control (CPU), is constructed as threshold value detector for ascertaining the field strength values (Ax).

8. Arrangement according to claim 7, in which the arrangement (AE) is constructed as threshold value detector with a variable threshold.

9. Arrangement according to one of the claims 5 to 8, in which the reference value storage device (RSP) is connected with the data bus (DB) to be manually disconnectable.

10. Arrrangement according to one of the claims 5 to 9, in which the working storage device (MEM) and the reference value storage device (RSP) are constructed as non-volatile storage devices.

11. Use of the arrangement according to one of the claims 5 to 10 with a video recorder for the recording of at least one preselectable program contribution which is identifiable by a further additional information, which is contained in a television transmitter signal (fsx), with the use of the data which are stored in the reference value storage device (RSP), are specific to countries and denote the association of television transmitter freqeuncies (fx) and reference identification signal values (RKx).

## Revendications

1. Procédé de mémorisation de canaux dans des récepteurs de télévision, dans lequel une commande (CPU) du récepteur de télévision (F) contrôle, lors d'une recherche d'émetteur à l'intérieur de la plage de fréquences d'émetteurs de télévision pouvant être reçue par le récepteur de télévision (F), des signaux d'émetteurs successifs (fsx, x=1 ... n) aux fins de détecter des signaux d'identification qui les englobent (signaux de source de programmes Kx), forme un couple d'informations (fxB'x) qui caractérise la fréquence de l'émetteur (fx) et une qualité de signal (Bx) fonction de l'intensité (Ax) du champ reçu et mémorise ce couple d'informations (fxB'x) dans une mémoire (S1.x, S2.x) spécifique de signal d'identification parmi, le cas échéant, plusieurs mémoires spécifiques de signal d'identification à chacune desquelles est associée une touche de station (T1,x, T2.x) spécifique de signal d'identification, à l'actionnement de laquelle la commande (CPU) lit l'information de fréquence (fx) contenue dans la mémoire (S1,x, S2.x) correspondante et règle le récepteur de télévision (F) sur la fréquence (fK) correspondant à l'information de fréquence (fx) lue, caractérisé par le fait que la commande (CPU), dans le cadre d'une recherche d'émetteur, lors de l'apparition d'un signal d'émetteur de télévision (fS1) examine la similitude du signal d'identification (K1) spécifique à la fréquence d'émetteur émis conjointement avec une valeur de signal d'identification (RK1) de référence correspondant à la fréquence (f1) de l'émetteur, mémorisé dans le récepteur de télévision, et forme une valeur (U'1) qui caractérise le degré de similitude, combine la valeur (U'1) avec la valeur (A'1) correspondante de l'intensité du champ reçu pour former une valeur (B'1) de qualité de signal et mémorise cette valeur (B'1) avec la fréquence (f1) associée en tant que couple d'informations (f1B'1) dans une mémoire (S1.x) spécifique de signal d'identification.

2. Procédé selon la revendication 1, caractérisé par le fait que la commande (CPU) du récepteur de télévision (F), lors de l'apparition, dans le cadre de la recherche, d'un deuxième signal d'émetteur ou de signaux d'émetteur (fs1, fs2) supplémentaires avec chaque fois un signal d'identification (K1) qui désigne la même source de programmes, compare entre elles les valeurs de qualité de signal (B'1, B'2) des premier et deuxième signaux d'émetteurs (fs1, fs2) formées à partir des intensités de champ (A'1, A'2) et des valeurs (U'1, U'2) caractérisant le degré de similitude des signaux d'identification et mémorise les couples d'informations (f1B'1, f2B'2) correspondants spécifiques de signal d'identification dans des première et deuxième mémoires (S1.1, S2.1) spécifiques de signal d'identification avec des priorités différentes de manière telle que les couples d'information (f1B'1, f2B'2) soient classés avec des priorités qui correspondent à la qualité du signal (B1, B2).

3. Procédé selon la revendication 2, caractérisé par le fait que la commande (CPU), une fois la recherche d'émetteur terminée, pendant les intervalles de temps durant lesquels le récepteur de télévision est réglé sur un signal de télévision, forme de manière cyclique, à intervalles de temps prédéterminés, pour les deux signaux de télévision (fs1, fs2) ayant le même signal d'identification, des valeurs de qualité de signal (B'1a, B'2a) actuelles et mémorise les couples d'informations (f1B'1a, f2B'2a) actualisés dans les première et deuxième mémoires (S1.1, S2.1) spécifiques de signal d'identification en fonction des qualités de signal (B 1a, B2a) actualisées ou intervertit l'affectation des mémoires (S1.x, S2.x) spécifiques de signal d'identification et des touches de station (T1.x, T2.x).

4. Procédé selon la revendication 2 ou 3, caractérisé par le fait que la commande (CPU), une fois la recherche d'émetteur terminée, examine le signal d'émetteur de télévision (fs1) pour la fréquence (f1) réglée à la recherche de chute d'intensité de champ (A1) et, par déclenchement par la chute de l'intensité de champ (A1), forme des valeurs de qualité de signal (B'1a, B'2a) actuelles et mémorise les couples d'informations (f1B'1a, f2B'2a) actualisés dans les première et deuxième mémoires (S1.1, S2.1) spécifiques de signal d'identification en fonction des qualités de signal (B1a, B2a) actualisées ou intervertit l'affectation des mémoires (S1.x, S2.x) spécifiques de signal d'identification et des touches de station (T1.x, T2.x).

5. Dispositif pour la mise en oeuvre du procédé selon l'une des revendications précédentes dans lequel une commande (CPU) de récepteur de télévision est reliée par l'intermédiaire d'un bus de données (DB) à une mémoire (RAM) contenant un programme pour la mise en oeuvre du procédé et à une mémoire de travail (MEM) qui comprend des première et deuxième mémoires (S1,x, S2.x) spécifiques de signal d'identification destinées à recevoir des couples d'informations (fxB'x) caractérisant la fréquence (fx) de l'émetteur et la qualité du signal (Bx), ainsi qu'une mémoire de tables (TSP) dans laquelle sont mémorisées des données d'adresse des première et deuxième mémoires (S1.x, S2.x) spécifiques de signal d'identification et dans lequel la commande (CPU) est en outre reliée à une mémoire de valeurs de référence (RSP), dans laquelle sont mémorisées des données spécifiques au pays ou à la région qui caractérisent la relation entre des fréquences (fx) données d'émetteurs de télévision et des valeurs (RKx) de signal de référence, ainsi qu'à des touches (Tx) de stations.

6. Dispositif selon la revendication 5, dans lequel la commande (CPU) de récepteur de télévision est agencée de telle sorte que le contenu des première et deuxième mémoires (S1,x, S2.x) spécifiques de signal d'identification et le cas échéant le contenu de la mémoire (RSP) de valeurs de référence ainsi que les valeurs (A'x, U'x) caractérisant l'intensité de champ et/ou le degré de similitude des signaux d'identification peuvent être affichés sur un dispositif d'affichage optique.

7. Dispositif selon l'une des revendications 5 ou 6, dans lequel un dispositif (AE) de détermination de l'intensité de champ (Ax) relié à la commande (CPU) de récepteur de télévision est agencé sous forme de détecteur de seuil.

8. Dispositif selon la revendication 7, dans lequel le dispositif (AE) est agencé sous forme de détecteur de seuil à seuil variable.

9. Dispositif selon l'une des revendications 5 à 8, dans lequel la mémoire (RSP) de valeurs de référence peut être reliée au bus de données (DB) avec possibilité de séparation manuelle.

10. Dispositif selon l'une des revendications 5 à 9, dans lequel la mémoire de travail (MEM) et la mémoire (RSP) de valeurs de référence sont agencées sous forme de mémoires non volatiles.

11. Utilisation du dispositif selon l'une des revendications 5 à 10 dans un magnétoscope, pour enregistrer au moins une émission présélectionnée identifiable par une information complémentaire contenue dans un signal d'émetteur de télévision (fsx), en utilisant les données spécifiques au pays ou à la région, mémorisées dans la mémoire de valeurs de référence (RSP) qui caractérisent la relation entre les fréquences (fx) d'émetteur de télévision et des valeurs de signal d'identification de référence (RKx).
